# EUROPÄISCHE PATENTANMELDUNG

(11) **EP 4 299 508 A1**
(43) Veröffentlichungstag der Anmeldung: **03.01.2024**
(21) Anmeldenummer: 22181543.4
(22) Anmeldetag: 28.06.2022
(51) Int. Cl.: C01B 3/06, H01M 8/0606, B60K 1/00, H01M 8/065, B60T 13/14

(54) **SYSTEM ZUR ENERGIEVERSORGUNG**

(71) Anmelder: E.M.I GmbH, 70469 Stuttgart (DE)
(72) Erfinder: Wollherr, Reinhard, 72250 Freudenstadt (DE)
(74) Vertreter: Kernebeck, Thomas

(57) **Zusammenfassung**

Die vorliegende Erfindung betrifft eine System zur Bereitstellung von Energie, umfassend:
- Ein System zur Bereitstellung von gasförmigem Wasserstoff, umfassend:
- Einen ersten Behälter (4) zur Bereitstellung eines festen Metallborhydrids,
- Einen Reaktor (10) zur Freisetzung von Wasserstoffgas aus dem Metallborhydrid,
- Einen zweiten Behälter (9) zur Aufnahme des verbrauchten Metallborhydrids,

- Einen Verbraucher, in welchem das Wasserstoffgas unter Freisetzung von Energie oxidiert wird,
wobei nach dem ersten Behälter (4) eine Transportvorrichtung vorgesehen ist, mit welcher das Metallborhydrid aus dem ersten Behälter (4) entnommen und dem Reaktor (10) zugeführt wird, und der Reaktor (10) aufweist:
- eine Wasserzuführung (6) zum Befeuchten des Metallborhydrids;
- eine Vorrichtung zur Bereitstellung eines Katalysators, und eine Entnahmevorrichtung (7) zur Entnahme von Wasserstoffgas.

## Beschreibung

Die Erfindung betrifft ein System zur Bereitstellung von Energie.

In der bisherigen industriellen Entwicklung wurden in erster Linie fossile Brennstoffe zur Energiebereitstellung genutzt. So wurde auf dem Gebiet des Transportwesens zunächst die Dampfmaschine entwickelt. Dabei werden fossile Brennstoffe verbrannt und die dabei freiwerdende Energie zur Erzeugung von Dampf verwendet. Der Dampf wird dann genutzt, um in einer Dampfmaschine kinetische Energie bereitzustellen, die dann beispielsweise zum Antrieb von Maschinen genutzt wird, beispielsweise von Dampflokomotiven. Derartige Dampfmaschinen besitzen jedoch einen sehr schlechten Wirkungsgrad, d.h. der größte Anteil der in einem fossilen Brennstoff enthaltene Energie geht als Wärme verloren.

In Verbrennungsmotoren, beispielsweise Ottomotoren oder Dieselmotoren, wird die bei der Verbrennung freigesetzte Energie direkt in kinetische Energie umgewandelt und steht als Rotationsbewegung zur Verfügung. Dazu sind komplexe mechanische Vorrichtungen erforderlich.

Ein allgemeines Problem bei der Nutzung fossiler Energieträger besteht darin, dass die Energieträger bei ihrer Verbrennung irreversibel verloren gehen und unvermeidlich Abfallprodukte, wie Verbrennungsgase, entstehen. Diese Abfallprodukte, im wesentlichen Kohlendioxid und Wasser, aber auch zahlreiche weitere Nebenprodukte, reichern sich in der Umwelt an und führen dort zu einer Verschlechterung der Lebensbedingungen.

Im Angesicht der Erwärmung des Erdklimas sind in jüngerer Zeit Entwicklungen angestoßen worden, die auf dem Einsatz erneuerbarer Energien beruhen. Dabei wird beispielsweise kinetische Energie, wie Windenergie oder Wasserkraft, zur Stromerzeugung genutzt. Ein anderer Weg der Stromerzeugung ist die Verwendung von Photovoltaik, wobei die Strahlung der Sonne direkt zur Erzeugung elektrischer Energie genutzt wird. Problematisch ist dabei, dass sich elektrische Energie nicht direkt in großer Menge speichern lässt. Da die Verfügbarkeit regenerativer Energien, wie Wind und Sonne, großen Schwankungen unterliegt, benötigt es ausgeklügelter Systeme, um eine konstante Versorgung mit Elektrizität bereitzustellen. Dies wird bei der dezentralisierten Bereitstellung großer Elektrizitätsmengen erreicht, indem lokale Schwankungen durch ein Verbundnetz ausgeglichen werden, bei dem überschüssige elektrische Energie, die an einem ersten Ort anfällt, an einem zweiten Ort, an welchem gerade ein Mangel an Elektrizität herrscht, bereitgestellt wird. Ggf. können Kraftwerke auch vom Netz genommen werden, wenn insgesamt zu viel elektrische Energie erzeugt wird.

Bei Verbrauchern, die nicht in einen solchen Verbund integriert werden können, muss die elektrische Energie in eine speicherbare Energieform umgewandelt werden. Dies erfolgt beispielsweise, indem elektrische Energie in chemische Energie umgewandelt wird. Dies erfolgt beispielsweise in Batterien. Insbesondere für die Anwendung in Automobilen wurden in jüngerer Zeit Lithium-Akkumulatoren entwickelt, die eine hohe Speicherkapazität sowie eine hohe Energiedichte aufweisen, sodass sie relativ große Energiemengen auf kleinem Raum aufnehmen können. Dies ist erforderlich, um bei Automobilen einerseits größere Reichweiten zu erreichen und andererseits das Gewicht und die Größe der Automobile nicht zu stark ansteigen zu lassen. Auch wenn bei der Entwicklung von Batterien große Fortschritte gemacht wurden, sind diese doch recht schwer und voluminös, sodass ein ständiger Bedarf nach alternativen Möglichkeiten der Energiespeicherung besteht.

Um in der Industrie eine Abkehr von fossilen Energieträgern, wie Kohle, Öl und Erdgas zu erreichen, ist geplant, gasförmigen Wasserstoff als alternativen Energieträger zu verwenden. Wasserstoffgas lässt sich durch Elektrolyse aus Wasser herstellen, sodass er relativ einfach als Speichermedium für aus erneuerbaren Ressourcen erzeugte Elektrizität verwendet werden kann. Wasserstoff lässt sich komprimieren oder verflüssigen, sodass sich im Vergleich zu Batterien der Raumbedarf für die Speicherung von Energie drastisch verringern lässt. Es bleibt jedoch das Problem, dass Wasserstoff nur bei sehr tiefer Temperatur in flüssiger Form vorliegt und gasförmiger Wasserstoff im Gemisch mit Sauerstoff hochexplosiv ist.

Da sich aus Wasserstoff Energie sehr rasch und in großen Mengen freisetzen lässt, eignet er sich für einen Einsatz zum Beispiel in Verbrennungsmotoren als Ersatz für fossile Energieträger. Außerdem lässt sich Wasserstoffgas in einer Brennstoffzelle wieder direkt in elektrische Energie zurückverwandeln. Aus den bereits erläuterten Gründen ist es jedoch schwierig, in Automobilen und anderen Kraftfahrzeugen gasförmigen Wasserstoff direkt als Energieträger zu verwenden.

Neben einer Verwendung in industriellen Prozessen wird erwartet, dass sich Wasserstoff auch als Energieträger im Schwerlastverkehr durchsetzen wird, da hier relativ große Energiemengen im Fahrzeug mitgeführt werden müssen, um einen wirtschaftlichen Einsatz erreichen zu können. Herkömmliche Batterien, wie Lithium-Sekundärbatterien, weisen hierfür eine zu geringe Energiedichte auf.

Insgesamt wird erwartet, dass Wasserstoff eine wesentliche Rolle bei der Energieversorgung einnehmen wird und fossile Energieträger in großem Umfang ersetzt. Dazu wird eine Industrie entwickelt, die große Mengen an Wasserstoff erzeugt und zur weiteren Verwendung bereitstellt. Die Erzeugung von Wasserstoff wird dabei sowohl in großen Anlagen an Orten erfolgen, an denen große regenerative Energiemengen zur Verfügung stehen, als auch lokal an Orten mit geringerer Energiedichte. Insgesamt wird daher Wasserstoff in großen Mengen dezentral zur Verfügung stehen und kann daher universell als Energieträger eingesetzt werden.

Als Übergangstechnologie lässt sich Wasserstoff auch aus Kohlenwasserstoffen gewinnen. Nachteilig werden dabei aber zurzeit noch fossile Brennstoffe, wie Erdgas, als Ausgangsmaterial eingesetzt.

Aufgabe der Erfindung ist es daher ein System zur Energieversorgung zur Verfügung zu stellen, das auf Basis von Wasserstoff betrieben werden kann, aber die bei Verwendung von gasförmigem Wasserstoff auftretenden Nachteile vermeidet. Insbesondere soll das System auch für mobile Anwendungen geeignet sein, beispielsweise für eine Verwendung in Automobilen.

Diese Aufgabe wird mit einem System zur Bereitstellung von Energie gelöst, wie es im Patentanspruch 1 definiert ist. Vorteilhafte Ausführungsformen des Systems sind Gegenstand der abhängigen Ansprüche.

Das erfindungsgemäße System beruht auf der Verwendung eines Metallborhydrids.

Als Metallborhydride werden bevorzugt Alkalimetallborhydride sowie Erdalkalimetallborhydride eingesetzt.

Ein bevorzugtes Metallborhydrid ist Natriumborhydrid. Natriumborhydrid (NaBH₄) liegt bei Normalbedingungen in fester Form vor und ist auch bei Anwesenheit von Luft oder Feuchtigkeit relativ reaktionsträge. Es lässt sich daher einfach handhaben und beispielsweise auch als wässrige Lösung bereitstellen.

In Anwesenheit von Wasser setzt Natriumborhydrid in einer exothermen Reaktion gasförmigen Wasserstoff frei, wobei Natriummetaborat als Reaktionsprodukt zurückbleibt. Aus einem Mol Natriumborhydrid werden dabei 4 Mol Wasserstoff (H₂) freigesetzt.

NaBH₄ + 2 H₂O > 4 H₂ + NaBO₂ + 217 kJ (1)

Die Reaktion lässt sich durch Wärmezufuhr, durch Einstellen eines sauren pH-Wertes sowie in Anwesenheit von Katalysatoren deutlich beschleunigen. Wird hochreines Wasser verwendet, können Ausbeuten von bis zu 98 % erreicht werden.

Die Reaktion ist auch deshalb sehr vorteilhaft, weil nicht nur der im Natriumborhydrid enthaltene Wasserstoff genutzt wird, sondern auch der im Reaktionspartner Wasser enthaltene Wasserstoff. Natriumborhydrid besitzt daher eine sehr hohe Energiedichte bzw. Speicherkapazität. Bei einer Dichte von Natriumborhydrid von 1,074 kg/l und einer Energiemenge von 33,3 kWh/kg für Wasserstoff entspricht dies einer Energiedichte von etwa 7,7 kWh/kg.

Bei der stöchiometrischen Umsetzung werden 2 Mol Wasser pro Mol Natriumborhydrid benötigt. Das Wasser wird jedoch normalerweise im Überschuss eingesetzt, um das bei der Reaktion entstehende Natriummetaborat in Form einer wässrigen Lösung anfallen zu lassen. Damit wird verhindert, dass das Natriummetaborat ausfällt und den Zugang zum Katalysator blockiert, wodurch sich die Effizienz der Reaktion erniedrigen würde.

Das entstandene Natriummetaborat lässt sich mit Wasserstoff wieder zu Natriumborhydrid umwandeln. Damit ist eine Kreislaufwirtschaft möglich, wobei an einem ersten Ort, beispielsweise in einem Kraftfahrzeug, Wasserstoff aus dem Natriumborhydrid freigesetzt wird. Der Wasserstoff kann dann als Energieträger beispielsweise für eine Brennstoffzelle oder einen Verbrennungsmotor genutzt werden. Das Natriummetaborat kann an einem zweiten Ort, beispielsweise einer Recyclingsstation, wieder mit Wasserstoff regeneriert werden, um dann erneut in Form von Natriumborhydrid eingesetzt zu werden.

Natriumborhydrid ist nicht entflammbar und bietet daher höchste Sicherheit. Es kann vollständig zu Natriummetaborat umgesetzt werden, sodass der in Form von Wasserstoff zur Verfügung stehende Energieinhalt vollständig genutzt werden kann. Auch bei tiefen Temperaturen muss keine Kapazitätseinbuße in Kauf genommen werden, sodass beispielsweise bei einer Verwendung in Kraftfahrzeugen stets die volle Reichweite zur Verfügung steht. Auch nach sehr vielen Ladezyklen steht eine konstante Aufnahmekapazität für Wasserstoff zur Verfügung, sodass Natriumborhydrid ein alterungsbeständiges Speichermedium darstellt.

Ein weiteres geeignetes Metallborhydrid ist Magnesiumborhydrid.

Das erfindungsgemäße System zur Bereitstellung von Energie, umfasst:
- einen ersten Behälter zur Bereitstellung eines festen Metallborhydrids,
- einen Reaktor zur Freisetzung von Wasserstoffgas aus dem Metallborhydrid,
- einen zweiten Behälter zur Aufnahme des verbrauchten Metallborhydrids.

Als Metallborhydrid wird bevorzugt Natriumborhydrid eingesetzt.

Ferner umfasst das erfindungsgemäße System einen Verbraucher, in welchem das Wasserstoffgas unter Freisetzung von Energie oxidiert wird.

Nach dem ersten Behälter ist eine Transportvorrichtung vorgesehen, mit welcher das Metallborhydrid, insbesondere Natriumborhydrid, aus dem ersten Behälter entnommen und dem Reaktor zugeführt wird.

Der Reaktor des erfindungsgemäßen Systems weist auf:
- eine Wasserzuführung zum Befeuchten des Metallborhydrids, insbesondere Natriumborhydrids;
- eine Vorrichtung zur Bereitstellung eines Katalysators, und
- eine Entnahmevorrichtung zur Entnahme von Wasserstoffgas.

Das erfindungsgemäße System umfasst zunächst einen ersten Behälter, in welchem ein festes Metallborhydrid, insbesondere Natriumborhydrid, bereitgestellt wird.

Der erste Behälter ist bevorzugt aus einem inerten Material aufgebaut, das eine ausreichende Stabilität aufweist, um auch bei raueren Bedingungen, wie bei einer mechanischen Einwirkung, wie sie bei einem Unfall auftreten können, weitgehend die Form des ersten Behälters zu behalten. Das Material ist bevorzugt stabil gegen Einstiche mit spitzen Gegenständen.

Geeignete Materialien sind beispielsweise Stahl, Kunststoffe, insbesondere faserverstärkte Kunststoffe, oder auch kohlefaserverstärkte Materialien. Der Aufbau des inerten Materials kann auch mehrschichtig sein, mit beispielsweise einer ersten Schicht aus Stahl, gefolgt von einer Schicht aus einem Gewebematerial, wie Kevlar^{®}, gefolgt von einer Schicht aus einem polymeren Kunststoff.

Der erste Behälter ist bevorzugt gasdicht ausgeführt, sodass das im ersten Behälter enthaltene Natriumborhydrid vor Wasserdampf oder Sauerstoff geschützt ist.

Der erste Behälter ist bevorzugt quaderförmig ausgeführt, sodass er sich beispielsweise leicht in eine entsprechende Einschuböffnung eines entsprechenden Regals einschieben lässt. Das Regal kann beispielsweise als Teil eines Fahrzeugs vorgesehen sein.

Um das Metallborhydrid, insbesondere Natriumborhydrid, in den ersten Behälter einfüllen zu können, ist bevorzugt eine verschließbare Einfüllöffnung vorgesehen. Auf diese Weise lässt sich der erste Behälter beispielsweise leicht in einer entsprechenden Vorrichtung mit frischem Metallborhydrid, insbesondere Natriumborhydrid, befüllen.

Ferner umfasst der erste Behälter eine Entnahmeöffnung, durch welche das Metallborhydrid, insbesondere Natriumborhydrid, aus dem ersten Behälter entnommen werden kann. Einfüllöffnung und Entnahmeöffnung können auch gemäß einer Ausführungsform zusammengefasst sein. Die Entnahmeöffnung ist bevorzugt verschließbar ausgeführt. Dazu kann beispielsweise ein beweglicher Verschluss vorgesehen sein, beispielsweise in Form einer verschiebbaren Wand, der die Entnahmeöffnung freigibt.

Der erste Behälter kann mit einem Überdruckventil ausgestattet sein. Baut sich durch eindringende Feuchtigkeit oder nach einer längeren Standzeit durch freigesetztes Wasserstoffgas ein Innendruck im ersten Behälter auf, kann dieser Innendruck kontrolliert abgesenkt werden, sodass eine Gefahr einer Zerstörung des ersten Behälters zuverlässig ausgeschlossen werden kann.

Ferner kann der erste Behälter Sensoren umfassen, beispielsweise für Druck, Temperatur, Konzentration bestimmter Komponenten etc. mit welchem der Zustand des im ersten Behälter enthaltenen Metallborhydrids, insbesondere Natriumborhydrids, überwacht werden kann. Ferner kann auch ein Sensor vorgesehen sein, mit welchem der Füllstand des im ersten Behälter enthaltenen Borhydrids gemessen werden kann.

Ferner kann ein elektronisches Speichermedium für die Speicherung von Informationen vorgesehen sein. Dies ermöglicht beispielsweise Daten über die Beladung des ersten Behälters, eine Identifikationsnummer des ersten Behälters etc. auf dem Speichermedium zu hinterlegen.

Das Speichermedium bzw. die Sensoren sind mit entsprechenden Anschlüssen bzw. Verbindungen verbunden, die eine, vorzugsweise drahtlose, Übertragung von Daten, beispielsweise auf einen zentralen Rechner, ermöglichen.

Der erste Behälter kann an sich in beliebiger Größe ausgeführt sein. Die geeignete Größe ergibt sich aus der Anwendung, in der das erfindungsgemäße System eingesetzt werden soll. Beispielhaft kann der erste Behälter für die Aufnahme einer Menge an Metallborhydrid, insbesondere Natriumborhydrid, vorgesehen sein, der in einem Bereich von 1 bis 20 kg ausgewählt ist.

Gemäß einer Ausführungsform ist die Breite des quaderförmigen ersten Behälters im Bereich von 10 bis 30 cm, bevorzugt 18 bis 25 cm gewählt.

Gemäß einer weiteren Ausführungsform ist die Höhe des ersten Behälters im Bereich von 10 bis 30 cm, bevorzugt 18 bis 25 cm gewählt.

Gemäß noch einer weiteren Ausführungsform ist die Tiefe des ersten Behälters im Bereich von 30 bis 60 cm, bevorzugt 40 bis 50 cm gewählt.

Der erste Behälter kann als einzelner Behälter ausgeführt sein oder auch als Kombination von mehreren Behältern, in denen jeweils Metallborhydrid, insbesondere Natriumborhydrid, enthalten ist.

In dem ersten Behälter ist in beladenem Zustand Metallborhydrid, insbesondere Natriumborhydrid, enthalten. Das Metallborhydrid, insbesondere Natriumborhydrid, liegt gemäß einer bevorzugten Ausführungsform in fester Form vor, bevorzugt in Form eines Pulvers. Das Pulver weist bevorzugt eine mittlere Korngröße Dso im Bereich von 10 bis 100 µm auf. Bevorzugt weist das Pulver einen engen Bereich für die Korngrößenverteilung auf. Die mittlere Korngröße D₂₀ wird bevorzugt in einem Bereich von 50 bis 60 µm gewählt. Die mittlere Korngröße D₈₀ des Pulvers wird bevorzugt in einem Bereich von 80 bis 100 µm gewählt. Die Werte D₂₀, D₅₀ und D₈₀ geben den Wert an, bei dem, bezogen auf das Gewicht, 20 %, 50 % bzw. 80 % des Pulvers eine geringere Korngröße aufweisen als der Wert D₂₀, D5o bzw. D₈₀.

Gemäß einer Ausführungsform ist das Metallborhydrid, insbesondere Natriumborhydrid, mit einer Rieselhilfe versetzt. Die Rieselhilfe liegt ebenfalls in Pulverform vor und soll ein Zusammenbacken des pulverförmigen Metallborhydrids, insbesondere Natriumborhydrids, verhindern. Eine geeignete Rieselhilfe ist beispielsweise Siliziumdioxid. Die Rieselhilfe weist gemäß einer Ausführungsform die im Wesentlichen gleiche Korngröße auf, wie das Metallborhydrid, insbesondere Natriumborhydrid.

Nach dem ersten Behälter ist eine Transportvorrichtung vorgesehen, mit welcher das Metallborhydrid, insbesondere Natriumborhydrid, aus dem ersten Behälter entnommen und einem Reaktor zugeführt wird.

Die Transportvorrichtung kann im einfachsten Fall ein Fallrohr sein, durch welches das Metallborhydrid, insbesondere Natriumborhydrid, nach Öffnen des Verschlusses am ersten Behälter der Schwerkraft folgend fällt und so zum Reaktor gelangt.

Bevorzugt wird eine Transportvorrichtung verwendet, in welcher das Metallborhydrid, insbesondere Natriumborhydrid, aktiv bewegt wird.

Geeignet sind beispielsweise eine Schneckenpumpe oder eine Exzenterschneckenpumpe.

Die Förderleistung der aktiven Transportvorrichtung wird in Abhängigkeit von der Wasserstoffmenge gewählt, welche mit dem erfindungsgemäßen System freigesetzt werden soll.

Durch die Transportvorrichtung wird das Metallborhydrid, insbesondere Natriumborhydrid, dem Reaktor zugeführt, wo die Freisetzung von Wasserstoffgas erfolgt.

In dem Reaktor wird das Metallborhydrid mit Wasser umgesetzt, im Fall von Natriumborhydrid nach der oben angegebenen Gleichung (1). Dazu wird das feste Metallborhydrid, insbesondere Natriumborhydrid, welches dem ersten Behälter entnommen wurde, zunächst mit Wasser vermischt.

Das Metallborhydrid, insbesondere Natriumborhydrid, kann dem Reaktor als Lösung oder als Feststoff zugeführt werden. *Bevorzugt wird das* Metallborhydrid, insbesondere Natriumborhydrid, als Pulver dem Reaktor zugeführt. Es ist aber auch möglich, das Metallborhydrid, insbesondere Natriumborhydrid, in anderer Form, beispielsweise als Paste dem Reaktor zuzuführen.

Wird dem Reaktor das Metallborhydrid, insbesondere Natriumborhydrid, in Form einer Lösung zugeführt, ist zwischen dem ersten Behälter und dem Reaktor eine Misch- und Lösevorrichtung vorgesehen, in welcher das aus dem ersten Behälter entnommene Metallborhydrid, insbesondere Natriumborhydrid, mit Wasser gemischt und aufgelöst wird. Die Wassermenge wird dabei bevorzugt so gewählt, dass sowohl das Metallborhydrid, insbesondere Natriumborhydrid, als auch das bei der Reaktion entstehende Metallborat, insbesondere Natriummetaborat, in der Lösung vollständig gelöst sind. Dies soll vermeiden, dass das bei der Reaktion zwischen Metallborhydrid, insbesondere Natriumborhydrid, und Wasser entstehende Metallborat, insbesondere Natriummetaborat ausfällt und sich auf einem im Reaktor vorgesehenen Katalysator niederschlägt. Dazu kann im erfindungsgemäßen System ein Vorratsbehälter für Wasser vorgesehen sein, in welchem das für das Lösen des Metallborhydrids, insbesondere Natriumborhydrids, benötigte Wasser vorgehalten wird. Ferner kann eine Pumpe vorgesehen sein, mit welcher das Wasser vom Vorratsbehälter in die Misch- und Lösevorrichtung überführt wird. Die Pumpe kann mit einer Steuerungsvorrichtung verbunden sein, welche die aus dem Vorratsbehälter entnommene Wassermenge entsprechend dem für das Auflösen des Metallborhydrids, insbesondere Natriumborhydrids, bzw. für die Freisetzung des Wasserstoffs erforderlichen Bedarf entnimmt.

Die verwendeten wässrigen Metallborhydridlösungen, insbesondere Natriumborhydridlösungen weisen gemäß einer Ausführungsform einen Metallborhydrid, insbesondere Natriumborhydridgehalt von mindestens 30 Gew.-%, gemäß einer weiteren Ausführungsform von zumindest 40 Gew.-% und gemäß noch einer weiteren Ausführungsform von zumindest 50 Gew.-% auf.

Der Vorratsbehälter für das Wasser kann mit einem Filter versehen sein, sodass das Wasser vor dem Auflösen bzw. der Umsetzung des Metallborhydrids, insbesondere Natriumborhydrids, sorgfältig gereinigt werden kann und damit in hochreiner Form vorliegt.

Gemäß einer weiteren Ausführungsform wird das Metallborhydrid, insbesondere Natriumborhydrid, dem Reaktor in fester Form, bevorzugt in Form eines Pulvers, bzw. in Form einer Paste zugeführt. Da Wasser bei der Freisetzung des Wasserstoffs in zumindest stöchiometrischer Menge mit dem Metallborhydrid, insbesondere Natriumborhydrid, umgesetzt wird, ist gemäß einer Ausführungsform eine Befeuchtungseinrichtung vorgesehen, in welcher Wasser zu dem Metallborhydrid, insbesondere Natriumborhydrid, gegeben wird. Die Befeuchtungseinrichtung ist mit einer Wasserzuführung ausgestattet, die mit einem Vorratsbehälter für Wasser verbunden ist. Um die gewünschte Wassermenge zuführen zu können ist bevorzugt eine Dosierpumpe vorgesehen, welche weiter bevorzugt mit einer elektronischen Regelung ausgerüstet ist.

Gemäß einer Ausführungsform ist die Befeuchtungseinrichtung vor der Transportvorrichtung angeordnet oder ist gemäß einer weiteren Ausführungsform in die Transportvorrichtung integriert. Dies hat den Vorteil, dass das feste Metallborhydrid, insbesondere Natriumborhydrid, homogen mit dem Wasser vermischt und damit bis zu dem gewünschten Grad befeuchtet wird.

Gemäß einer Ausführungsform kann das Metallborhydrid, insbesondere Natriumborhydrid, mit einem Katalysator vermischt werden. Dazu kann beispielsweise vorgesehen sein, dass dem zum Befeuchten verwendeten Wasser Katalysator, beispielsweise eine Säure zugegeben wird. Gemäß einer weiteren Ausführungsform wird der Katalysator, wie die Säure, erst nach dem Befeuchten dem befeuchteten Metallborhydrid, insbesondere Natriumborhydrid, zugegeben.

Der Vorteil dieser Reaktionsführung liegt darin, dass das Metallborhydrid, insbesondere Natriumborhydrid, zunächst in trockener Form vorgehalten wird. Trockenes Metallborhydrid, insbesondere Natriumborhydrid, ist relativ stabil. Das Metallborhydrid, insbesondere Natriumborhydrid, wird zunächst befeuchtet. Bevorzugt wird die Wassermenge zum Befeuchten so gewählt, dass sie zumindest der Menge an Wasser entspricht, die stöchiometrisch mit dem Metallborhydrid, insbesondere Natriumborhydrid, umgesetzt wird.

Anschließend wird das befeuchtete Metallborhydrid, insbesondere Natriumborhydrid, mit einem Katalysator in Kontakt gebracht.

Der Katalysator ist gemäß einer ersten Ausführungsform eine Säure, insbesondere eine Mineralsäure. Säuren weisen eine stark korrodierende Wirkung auf. Die Menge an Säure wird daher bevorzugt möglichst niedrig gewählt.

Die Zugabe der Säure erfolgt bevorzugt in der Weise, dass eine rasche und intensive Vermischung mit dem befeuchteten Metallborhydrid, insbesondere Natriumborhydrid, erfolgt.

Nach Zugabe der Säure erfolgt eine relativ zügige Zersetzung des Metallborhydrids, insbesondere Natriumborhydrids, unter Freisetzung von gasförmigem Wasserstoff. Um eine weitere Beschleunigung der Freisetzung von Wasserstoff zu erreichen kann gemäß einer Ausführungsform vorgesehen sein, dass eine Heizvorrichtung vorgesehen ist, um das befeuchtete und mit einem Katalysator, wie einer Säure, versetzte Metallborhydrid, insbesondere Natriumborhydrid, zu erwärmen.

Gemäß einer Ausführungsform ist vorgesehen, dass der Reaktor als Mischstrecke ausgebildet ist, beispielsweise in Form einer Schraubenpumpe. Am Eingang des Schraubenpumpe wird trockenes Metallborhydrid, insbesondere Natriumborhydrid, zugeführt, das aus dem ersten Behälter entnommen wurde. Stromabwärts ist eine Wasserzuführung vorgesehen, durch welche das Metallborhydrid, insbesondere Natriumborhydrid, mit Wasser versetzt wird. Durch die Bewegung der Schraubenpumpe wird das Gemisch aus Wasser und Metallborhydrid, insbesondere Natriumborhydrid, intensiv durchmischt.

Gemäß einer Ausführungsform ist vorgesehen, dass gleichzeitig mit dem Wasser der Katalysator zugeführt wird, beispielsweise eine Säure. Bei dieser Ausführungsform wird also eine wässrige Lösung einer Säure zum trockenen Metallborhydrid, insbesondere Natriumborhydrid, gegeben.

Gemäß einer weiteren Ausführungsform ist vorgesehen, dass die Zuführung für den Katalysator, beispielsweise eine Säure, weiter stromabwärts zur Zuführung für Wasser angeordnet ist. Auf diese Weise lässt sich die bei der Zersetzung des Metallborhydrids, insbesondere Natriumborhydrids, ablaufende Reaktion leichter kontrollieren.

Gemäß einer weiteren Ausführungsform ist der Reaktionsraum des Reaktors zumindest abschnittsweise mit einer Beschichtung versehen, die den Katalysator enthält. Bei der Passage durch den Reaktor wird das bereits befeuchtete Metallborhydrid, insbesondere Natriumborhydrid, durch den Reaktor geführt und kommt dabei mit Innenflächen des Reaktionsraums in Kontakt bzw. gleitet an diesen entlang. Dabei wird durch den Katalysator eine Reaktion zwischen Metallborhydrid, insbesondere Natriumborhydrid, und Wasser induziert und es wird Wasserstoffgas freigesetzt. Zurück bleibt als Nebenprodukt Metallborat, insbesondere Natriummetaborat, welches am Ende der Mischstrecke wieder aus dem Reaktionsraum herausgeführt wird.

Geeignete Katalysatoren sind beispielsweise cobalthaltige Katalysatoren, z. B. in Powerskit als Nanopulver oder molybdänhaltig in Form von Molybdänsulfit.

Geeignete Katalysatormaterialien sind beispielsweise Powerskit-Nanopulver, Molybdänsulfit.

Die Katalysatormaterialien können direkt die Schicht bilden. Die Beschichtung des Reaktorinnenraums besteht dann aus dem Katalysator.

Gemäß einer weiteren Ausführungsform sind die Katalysatoren in eine Matrix eingebettet, welche dann im Wesentlichen eine Auskleidung des Reaktorinnenraums bildet. Geeignete Matrixmaterialien sind beispielsweise keramische Materialien, wie z. B. Siliziumcarbid. Auf diese Weise lässt sich eine sehr harte und widerstandsfähige Beschichtung verwirklichen, die lange Betriebszeiten des Reaktors ermöglicht, ehe ggf. ein Austausch der Beschichtung erforderlich wird.

Bevorzugt findet während der Umsetzung des Metallborhydrids, insbesondere Natriumborhydrids, mit Wasser eine intensive Durchmischung statt, sodass eine rasche Reaktion erreicht wird. Besonders bevorzugt wird der Reaktor daher als Mischstrecke ausgeführt, wobei das Mischwerkzeug vorzugsweise ebenfalls mit dem Katalysator beschichtet ist bzw. mit einer katalytisch aktiven Beschichtung versehen ist.

Wie bereits oben erläutert ist beispielsweise eine Schraubenpumpe besonders bevorzugt. Die Flächen der Wendel sind dann bevorzugt ebenfalls mit einer katalytisch aktiven Beschichtung versehen.

Der Reaktor bzw. die Mischstrecke ist bevorzugt sehr kompakt ausgeführt. Es werden pro Zeiteinheit bevorzugt relativ geringe Mengen an Metallborhydrid, insbesondere Natriumborhydrid, durch den Reaktor geführt, die jedoch eine relativ geringe Aufenthaltsdauer im Reaktor aufweisen.

Gemäß einer Ausführungsform weist der Reaktionsraum des Reaktors eine Länge im Bereich von 5 bis 300 mm, gemäß einer weiteren Ausführungsform eine Länge im Bereich von 10 bis 200 mm, und gemäß noch einer weiteren Ausführungsform eine Länge im Bereich von 15 bis 100 mm auf. Unter einer Länge des Reaktionsraums wird die Ausdehnung des Reaktionsraums in Transportrichtung des Natriumborhydrids verstanden.

Gemäß einer Ausführungsform weist der Reaktionsraum eine Breite im Bereich von 5 bis 30 mm, gemäß einer weiteren Ausführungsform eine Breite von 8 bis 25 mm und gemäß einer weiteren Ausführungsform eine Breite von 10 bis 20 mm auf. Unter der Breite des Reaktionsraums wird die Ausdehnung des Reaktionsraums senkrecht zur Transportrichtung des Natriumborhydrids verstanden.

Der Reaktionsraum weist gemäß einer Ausführungsform ein aktives Volumen 100 bis 200 ml, gemäß einer weiteren Ausführungsform ein aktives Volumen von 250 bis 300 ml, und gemäß einer weiteren Ausführungsform ein aktives Volumen von 350 bis 400 ml auf.

Sind Einbauten im Reaktionsraum vorgesehen, wie beispielsweise die Schraube einer Schraubenpumpe, so entspricht das aktive Volumen des Reaktionsraums dem Volumen, welches im Reaktionsraum vom Metallborhydrid, insbesondere Natriumborhydrid, bzw. dem Metallborhydrid, insbesondere Natriumborhydrid, umfassenden Gemisch eingenommen werden kann.

Weiter ist eine Entnahmevorrichtung zur Entnahme des freigesetzten Wasserstoffgases vorgesehen.

Gemäß einer ersten Ausführungsform ist vorgesehen, dass die Wand des Reaktionsraumes Öffnungen aufweist, durch welche der gasförmige Wasserstoff abgeführt werden kann.

Die Öffnungen sind vorzugsweise so geformt, dass das an den Öffnungen vorbeigeführte Metallborhydrid, insbesondere Natriumborhydrid, bzw. das Metallborhydrid, insbesondere Natriumborhydrid, enthaltene Gemisch nicht in die Öffnungen eindringt.

Gemäß einer weiteren Ausführungsform ist vorgesehen, dass sich nach dem Reaktionsraum ein Entgasungsraum anschließt, in welchem der gasförmige Wasserstoff von den festen bzw. flüssigen Bestandteilen des Reaktionsgemischs abgetrennt wird.

Gemäß einer ersten Ausführungsform wird das Reaktionsgemisch aus dem Reaktionsraum in den Entgasungsraum überführt. An einem ersten Ausgang des Entgasungsraums ist eine weitere Transportvorrichtung vorgesehen, beispielsweise eine Schraubenpumpe, mit welcher die festen Bestandteile des Reaktionsgemischs, im Wesentlichen Natriummetaborat mit einem Anteil von Wasser, aus dem Entgasungsraum abtransportiert werden. Das Natriummetaborat wird dann in einem zweiten Behälter gesammelt.

Durch einen zweiten Ausgang, der getrennt vom ersten Ausgang vorgesehen ist, wird der Wasserstoff abgeführt und bevorzugt in einem Zwischenspeicher gesammelt, der für diesen Zweck gemäß einer Ausführungsform vorgesehen ist. Es kann eine Pumpe vorgesehen sein, mit welcher der gasförmige Wasserstoff aktiv aus dem Entgasungsraum abgesaugt und dem optional vorgesehenen Zwischenspeicher zugeführt wird.

Ist vor dem Entgasungsraum eine Schraubenpumpe angeordnet, welche den Reaktionsraum bildet, so wird das Reaktionsgemisch, welches den Reaktionsraum verlässt, gemäß einer weiteren Ausführungsform durch nachfolgendes Reaktionsgemisch durch den Entgasungsraum geschoben. Der Entgasungsraum weist an seiner Umfangsfläche Öffnungen auf, durch welche der Wasserstoff abgeführt wird. Bei dieser Ausführungsform weist der Entgasungsraum bevorzugt ein ähnliches Profil auf wie der Reaktionsraum.

Die Abführung des gasförmigen Wasserstoffs kann durch den im Entgasungsraum eingestellten Überdruck erfolgen oder es kann gemäß einer Ausführungsform eine Pumpe vorgesehen, mit welcher der Wasserstoff abgesaugt und einem Zwischenspeicher zugeführt wird.

Die Abtrennung des Wasserstoffs von der festen Phase kann z. B. durch Pumpen mit Filtern, wie sie beispielsweise auch in Brennstoffzellen eingesetzt werden, erfolgen.

Weiter umfasst das System einen zweiten Behälter zur Aufnahme des verbrauchten Metallborhydrids, insbesondere Natriumborhydrids.

Das verbrauchte Metallborhydrid, insbesondere Natriumborhydrid, liegt im Wesentlichen als Metallborat, insbesondere Natriummetaborat vor, welches Wasser enthalten kann, das nicht in der Reaktion verbraucht wurde.

Der zweite Behälter kann mit Sensoren versehen sein, beispielsweise um die Temperatur im Inneren des zweiten Behälters, den Innendruck im zweiten Behälter, den Füllstand des zweiten Behälters, oder auch um beispielsweise die Zusammensetzung des verbrauchten Metallborhydrids, insbesondere Natriumborhydrids, zu bestimmen.

Gemäß einer Ausführungsform ist der zweite Behälter mit einem Überdruckventil ausgerüstet.

Gemäß einer weiteren Ausführungsform ist der zweite Behälter mit einer Entnahmeöffnung versehen, durch welche das verbrauchte Metallborhydrid, insbesondere Natriumborhydrid, entnommen werden kann.

Weiter umfasst das System einen Verbraucher, in welchem der erzeugte Wasserstoff in Energie umgewandelt wird.

An sich kann der Verbraucher beliebig gewählt werden, in welchem der erzeugte Wasserstoff oxidiert und die dabei freiwerdende Energie für eine weitere Nutzung zur Verfügung steht

Gemäß einer ersten Ausführungsform ist der Verbraucher eine Brennstoffzelle. Brennstoffzellen sind an sich bekannt und die Erfindung unterliegt hierbei an sich keinen Beschränkungen. Es können beliebige Brennstoffzellen genutzt werden. Bei der Ausführung des Verbrauchers als Brennstoffzelle steht die bei der Oxidation des Wasserstoffs freiwerdende Energie in Form von Elektrizität zur Verfügung. Diese Elektrizität lässt sich dann beispielsweise zum Antrieb eines Elektromotors nutzen.

Gemäß einer weiteren Ausführungsform ist der Verbraucher als Wärmekraftmaschine ausgeführt, insbesondere als Verbrennungsmotor. Hierbei wird die bei der Oxidation des Wasserstoffs freiwerdende Energie in Form von kinetischer Energie genutzt. Dazu kann beispielsweise ein Hubkolbenmotor oder auch ein Drehkolbenmotor genutzt werden. Ein beispielhafter Drehkolbenmotor ist ein Motor, der nach dem Wankelprinzip arbeitet.

Ein weiterer geeigneter Motor ist ein Monoblockrotationsmotor. Ei solcher Motor wird in einer parallelen Anmeldung des Erfinders beschrieben.

Die freigesetzte kinetische Energie kann beispielsweise zum Antrieb eines Fahrzeugs genutzt werden.

Um die Freisetzung des Wasserstoffs zu beschleunigen kann der Reaktor bzw. die Mischstrecke gemäß einer Ausführungsform mit einer Heizvorrichtung versehen sein. Dazu kann beispielsweise eine elektrische Heizvorrichtung vorgesehen sein, mit welcher die Wand der Mischstrecke, wie eine Schraubenpumpe, abschnittsweise oder über die gesamte Länge der Mischstrecke beheizt werden kann.

Gemäß einer weiteren Ausführungsform ist vorgesehen, dass ein Mantel um die Mischstrecke angeordnet ist, durch welchen ein Wärmeträgermedium geführt werden kann. Das Wärmeträgermedium kann beispielsweise Wasser sein, mit welchem Wärme, die stromabwärts im System erzeugt wird, zur Mischstrecke transportiert wird. Der Wärmemantel kann den gesamten Umfang der Mischstrecke umfassen.

Gemäß einer weiteren Ausführungsform kann der Mantel aber auch nur Segmente der Umfangsfläche der Mischstrecke umfassen.

Das bei der Umsetzung des Metallborhydrids, insbesondere Natriumborhydrids, mit Wasser entstehende Metallborat, insbesondere Natriummetaborat, kann, wie z.B. das im Fall von Natriumborhydrid entstehende Natriummetaborat, im Vergleich zu Natriumborhydrid in Wasser schwerer löslich. Um zu vermeiden, dass das Metallborat, wie Natriummetaborat ausfällt und zu Anhaftungen an der Reaktorinnenwand bzw. an Einbauteilen des Reaktors führt, die beispielsweise auch Abführöffnungen für das entstehende Wasserstoffgas verstopfen können, ist gemäß einer Ausführungsform vorgesehen, in der Reaktorwand bzw. in Oberflächen von Einbauteilen, die sich im Reaktorraum befinden, Auslassöffnungen für Wasser oder wässrige Lösungen vorzusehen. Durch diese Auslassöffnungen kann Wasser in der Reaktionsraum eingeführt werden, welches entlang der Innenwand des Reaktors bzw. an Wänden von Einbauteilen im Reaktorraum einen Wasserfilm ausbildet, sodass Metallborate, wie Natriummetaborat, welche sich in der Nähe solcher Wände bildet, in Lösung verbleiben und die Ausbildung von Anhaftungen vermieden wird.

Gemäß einer bevorzugte Ausführungsform ist der erste Behälter und/oder der zweite Behälter als Wechselbehälter ausgeführt.

Auf diese Weise lassen sich die Behälter sehr leicht auswechseln. Ein leerer erster Behälter wird dabei durch einen ersten Behälter ersetzt, der mit Metallborhydrid, insbesondere Natriumborhydrid, gefüllt ist. Ein mit verbrauchtem Metallborhydrid, insbesondere verbrauchtem Natriumborhydrid, gefüllter zweiter Behälter wird durch einen leeren Behälter ausgetauscht. Diese Ausführungsform ist insbesondere für eine Anwendung des erfindungsgemäßen Systems in Fahrzeugen geeignet.

Eine Infrastruktur, welche den Wechsel von Behältern ermöglicht, lässt sich sehr leicht bereitstellen. Dazu können beispielsweise bereits bestehende Tankstellen für den Vertrieb von Mineralkraftstoffen entsprechend ausgerüstet werden.

Der Austausch der Behälter kann auch automatisiert erfolgen. Dazu kann beispielsweise eine Vorrichtung mit einem Roboterarm vorgesehen sein, welche den gebrauchten Behälter entnimmt und durch einen frischen Behälter ersetzt. Der Ersatz des verbrauchten Metallborhydrids, insbesondere Natriumborhydrids, durch frisches Metallborhydrid, insbesondere Natriumborhydrid, lässt sich dadurch sehr schnell und einfach durchführen. Der Behälter mit dem verbrauchten Metallborhydrid, insbesondere Natriumborhydrid, im Wesentlichen Metallborat, insbesondere Natriummetaborat und Wasser, kann dann zu einer Recyclingstation gebracht werden, in welcher das Metallborat, insbesondere Natriummetaborat, wieder in das Metallborhydrid, insbesondere Natriumborhydrid umgewandelt wird.

Gemäß einer Ausführungsform sind erster und/oder zweiter Behälter normiert, d.h. sie haben festgelegte Abmessungen. Dadurch lassen sich Arbeitsvorgänge, wie ein Wechsel des Behälters, leicht automatisieren.

Gemäß einer Ausführungsform wird der erste bzw. der zweite Behälter aus mehreren Behältern geformt.

Insbesondere bei der Verwendung standardisierter Behälter kann die Menge des zur Verfügung stehenden Metallborhydrids, insbesondere Natriumborhydrids, dann über die Zahl der Behälter eingestellt werden.

Beispielswiese benötigt ein kleines Fahrzeug, beispielsweise ein Kraftfahrzeug für die individualisierte Personenbeförderung, eine deutlich geringere Menge an Metallborhydrid, insbesondere Natriumborhydrid, als z.B. ein Lastkraftwagen oder ein Bus. Fahrzeuge mit einem geringeren Energiebedarf können dann beispielsweise eine geringere Menge an standardisierten Behältern mitführen als schwerere Fahrzeuge.

Beispielsweise kann ein standardisierter Behälter 10 kg Metallborhydrid, insbesondere Natriumborhydrid, aufnehmen. Für ein Fahrzeug das nur eine geringe Reichweite benötigt, kann es dann ausreichend sein, nur einen einzelnen ersten Behälter mitzuführen.

Bei Fahrzeugen, die für Aufgaben eingesetzt werden, die eine größere Reichweite verlangen, können dann entsprechend mehr erste Behälter mitgeführt werden, beispielsweise 3 oder 4 Behälter.

Werden mehrere Behälter mitgeführt, beispielsweise in einem Kraftfahrzeug, kann ein Regalsystem vorgesehen sein, Ist einer der Behälter im Regalsystem leer, weil das Metallborhydrid, insbesondere Natriumborhydrid, verbraucht wurde, kann dann ein frisch beladener Behälter im Regal ausgewählt werden und dann aus diesem Behälter das Metallborhydrid, insbesondere Natriumborhydrid, entnommen werden.

Beim Betrieb des Systems ist es vorteilhaft, wenn die Freisetzung des Wasserstoffs aus dem Metallborhydrid, insbesondere Natriumborhydrid, rasch und gesteuert erfolgt.

Gemäß einer Ausführungsform ist vorgesehen, dass am Reaktor eine Elektropulsationsvorrichtung vorgesehen ist, mit welcher eine pulsierende Spannung an den Reaktor angelegt wird.

Gemäß einer Ausführungsform ist vorgesehen, dass die Elektropulsationsvorrichtung durchstimmbar ist, also die Frequenz der pulsierenden Spannung eingestellt werden kann.

Als Elektropulsationsvorrichtung werden ein Rechteckgenerator für nanogepulsten Gleichstrom mit Thyristor und ein Rechteckgenerator für Mikropulse so kombiniert, dass im Abstand der Mikropulse der nanogepulste Gleichstrom ein- und ausgeschaltet wird. Damit wird die Auflösung von Blasen und Auffüllung von Ionen sowie eine Vermeidung von elektrischer Doppelschicht erreicht. Diese Methode des in mikrogepulsten nanogepulsten eingebetteten Gleichstroms kann vorteilhaft eingesetzt werden, um die Wasserstoffproduktion aus Metallborhydrid, insbesondere Natriumborhydrid, durch eine Erhöhung der Reaktantenkonzentration an den leitenden Oberflächen zu erzielen. Die Lager für eingesetzte Schrauben-, Schnecken- oder Exzenterschneckenpumpen können beispielsweise eine elektrische Isolierung gegenüber ihren Gehäusen aufweisen, damit Schrauben und Gehäuse als Elektroden für die angelegte pulsierende Gleichspannung dienen.

Wie bereits erläutert, kann die Freisetzung von Wasserstoff aus Metallborhydrid, insbesondere Natriumborhydrid, durch die Anwesenheit eines Katalysators wesentlich beschleunigt werden. Der Katalysator kann dem Metallborhydrid, insbesondere Natriumborhydrid, beigegeben werden.

Gemäß einer bevorzugten Ausführungsform ist vorgesehen, dass die Vorrichtung zur Bereitstellung des Katalysators als Beschichtung ausgeführt ist, welche den Katalysator enthält.

Geeignete Zusammensetzungen für den Katalysator wurden bereits erläutert.

Die Katalysatorbeschichtung weist vorzugsweise eine harte und widerstandsfähige Oberfläche auf, sodass die Beschichtung eine lange Lebensdauer aufweist.

Gemäß einer Ausführungsform weist die Katalysatorschicht eine Schichtstärke von zumindest 1,2 µm auf, gemäß einer weiteren Ausführungsform eine Schichtdicke von zumindest 1,8 µm. Bevorzugt wird die Schichtdicke der Katalysatorschicht in einem Bereich von 1,2 bis 1,4 µm, gemäß einer weiteren Ausführungsform in einem Bereich von 1,5 bis 1,8 µm gewählt

Gemäß einer weiteren Ausführungsform weist die Katalysatorschicht eine Oberflächenstruktur auf. Die Oberflächenstruktur ist dem Innenraum des Reaktionsraums zugewandt. Durch die Oberflächenstruktur wird die für die Wechselwirkung zwischen der Metallborhydrid, insbesondere Natriumborhydrid, enthaltenden Reaktionsmasse und der zur Verfügung stehenden Oberfläche der Katalysatorschicht vergrößert. Ferner ist gemäß einer Ausführungsform die Oberflächenstruktur so ausgebildet, dass eine Durchmischung der das Metallborhydrid, insbesondere Natriumborhydrid, enthaltenden Reaktionsmischung bewirkt wird. Eine geeignete Oberflächenstruktur ist beispielsweise eine schraubenförmige Struktur, die entlang der Innenfläche des Reaktionsraums vorgesehen ist.

Wird eine Schraubenpumpe verwendet, ist gemäß einer Ausführungsform die in der Wand des Reaktors eingebrachte Schraubenstruktur in der Weise ausgebildet, dass sie die gleiche Drehrichtung aufweist, wie die Schraube der Schraubenpumpe, Die Steigung der schraubenförmigen Oberflächenstruktur jedoch unterschiedlich zur Steigung der Schraube der Schraubenpumpe gewählt ist.

Gemäß einer bevorzugten Ausführungsform sind Oberflächenstrukturen vorgesehen, die parallellaufende feine vertiefte Linien aufweisen.

Gemäß einer Ausführungsform ist die Oberflächenstruktur als laserinduzierte Oberflächenstruktur ausgebildet.

Die mit Lasertechnik auf der Oberfläche erzeugten parallel verlaufenden feinen vertieften Linien folgen der Form der Schrauben und bilden dank der Vergrößerung der Oberfläche die Grundlage für eine Beschichtung mit einem Nanokatalysator.

Gemäß einer Ausführungsform des erfindungsgemäßen Systems ist vorgesehen, dass erster und zweiter Behälter als gemeinsamer Behälter ausgebildet sind und der gemeinsame Behälter eine verschiebbare Trennwand aufweist, welcher den Innenraum des gemeinsamen Behälters in ein erstes Kompartiment und ein zweites Kompartiment aufteilt.

Bei dieser Ausführungsform lässt sich der Raumbedarf der Behälter besonders kompakt ausgestalten, da nur ein einzelner Behälter erforderlich ist und der Behälter sowohl für die Bereitstellung des Metallborhydrids, insbesondere Natriumborhydrids, als auch für die Aufnahme des Metallborats, insbesondere Natriummetaborats, genutzt werden kann. Der Platzbedarf des Behälters kann wegen der Doppelnutzung dann annähernd halbiert werden, da keine getrennten Behälter für die Aufnahme des Metallborhydrids, insbesondere Natriumborhydrids, und für die Aufnahme des Metallborats, insbesondere Natriummetaborats, erforderlich sind.

Dies ist besonders vorteilhaft, wenn der Behälter austauschbar ausgebildet ist und ein Wechselsystem zum Austausch der Behälter zur Verfügung steht. In dem Wechselsystem wird ein Behälter bereitgestellt, der mit frischem Metallborhydrid, insbesondere Natriumborhydrid, gefüllt ist. Dieser kann dann beispielsweise in das in einem Kraftfahrzeug vorgesehene System eingesetzt werden. Das Metallborhydrid, insbesondere Natriumborhydrid, wird im System des Kraftfahrzeugs verbraucht und das dabei entstehende Metallborat, insbesondere Natriummetaborat, wieder in den Behälter zurückgeführt. Durch die bewegliche Trennwand sind im Behälter zwei Kompartimente bereitgestellt, deren Volumen sich jeweils gemäß dem Ladezustand des Behälters, also der Menge an Metallborhydrid, insbesondere Natriumborhydrid, bzw. an Metallborat, insbesondere Natriummetaborat verändert.

Ist der Behälter vollständig entladen, also alles Metallborhydrid, insbesondere Natriumborhydrid, verbraucht, liegt die bewegliche Trennwand an der Innenseite der Wand des Behälters an und das Volumen des Kompartiments, das für die Aufnahme von Metallborhydrid, insbesondere Natriumborhydrid, vorgesehen ist, beträgt Null bzw. einen sehr kleinen Wert. Das Volumen des Kompartiments für die Aufnahme des Metallborats, insbesondere Natriummetaborats, entspricht dagegen dem maximalen Volumen, das im Wesentlichen dem Innenvolumen des Behälters vermindert um das Volumen der beweglichen Trennwand entspricht.

Der Behälter kann mit einer Mechanik ausgestattet sein, die eine Bewegung der beweglichen Zwischenwand ermöglicht. Ferner kann eine Steuerungselektronik vorhanden sein, welche eine Verschiebung der beweglichen Zwischenwand entsprechend dem Füllungszustand des ersten bzw. zweiten Kompartiments steuert. Ggf. können Sensoren vorgesehen sein, mit welchen der Füllungszustand eines einzelnen bzw. beider Kompartimente ermittelt werden kann.

Wie bereits oben erläutert wurde, ist die Transportvorrichtung gemäß einer Ausführungsform als Schneckenpumpe ausgeführt.

Die Schneckenpumpe ist gemäß einer Ausführungsform mit einem Antrieb ausgerüstet, wie einem elektrischen Antrieb. Der Antrieb ist gemäß einer weiteren Ausführungsform mit einer Steuerung versehen, mit welcher die Förderleistung der Schneckenpumpe gesteuert werden kann.

Gemäß einer Ausführungsform kann mehr als eine Schneckenpumpe vorgesehen sein. Die einzelnen Schneckenpumpen werden gemäß einer Ausführungsform jeweils für einen Abschnitt im Reaktionsverlauf der Umsetzung des Metallborhydrids, insbesondere Natriumborhydrids, eingesetzt. Zwischen den einzelnen Abschnitten können weitere Komponenten angeordnet sein, in denen jeweils eine Prozessierung des Reaktionsgemisches erfolgt.

So ist gemäß einer Ausführungsform nach dem ersten Behälter eine erste Transportvorrichtung, insbesondere Schraubenpumpe vorgesehen, mit welcher trockenes pulverförmiges Metallborhydrid, insbesondere Natriumborhydrid, aus dem ersten Behälter entnommen wird. Durch die erste Transportvorrichtung wird das trockene Metallborhydrid, insbesondere Natriumborhydrid, zu einer Befeuchtungsstation transportiert, in welcher das trockene Metallborhydrid, insbesondere Natriumborhydrid, mit Wasser versetzt wird.

In der Befeuchtungsstation wird das Metallborhydrid, insbesondere Natriumborhydrid, mit Wasser versetzt und gemischt bzw. verknetet, sodass eine homogene Mischung erhalten wird. Als Mischvorrichtung ist beispielsweise eine Mischstufe mit doppelter Bandschnecke geeignet. Die Mischvorrichtung sorgt mit entsprechender Rotationsgeschwindigkeit für ein Fließbett zum guten Zumischen von Wasser für eine homogene Mischung.

Danach wird die homogene Mischung einer weiteren Transportvorrichtung, insbesondere einer Schraubenpumpe, zugeführt und zum Reaktor transportiert, wo der gasförmige Wasserstoff aus dem Metallborhydrid, insbesondere Natriumborhydrid, freigesetzt wird.

Im Reaktor erfolgt bevorzugt eine kontinuierliche Durchmischung und Bewegung der Reaktionsmischung. Dazu können im Reaktor entsprechende Durchmischungsvorrichtungen vorgesehen sein.

Nach dem Reaktor kann gemäß einer weiteren Ausführungsform eine weitere Transportvorrichtung, insbesondere eine Schraubenpumpe (Transportschnecke), vorgesehen sein, in welchem die nach der Umsetzung des Metallborhydrids, insbesondere Natriumborhydrids, entstandenen Reaktionsprodukte dem zweiten Behälter zugeführt werden.

Bei der soeben vorgestellten Ausführungsform sind mehrere Transportvorrichtungen, insbesondere Schraubenpumpen, vorgesehen, um das Reaktionsgemisch durch das erfindungsgemäße System zu transportieren.

Gemäß einer Ausführungsform ist vorgesehen, dass mehrere der soeben beschriebenen Transportvorrichtungen zu einer gemeinsamen Transportvorrichtung zusammengefasst sind. Auf diese Weise lässt sich der mechanische Aufwand deutlich verringern.

So ist gemäß einer Ausführungsform vorgesehen, dass die Transportschnecke zumindest teilweise im Reaktionsraum des Reaktors angeordnet ist.

Auf diese Weise kann die Transportschnecke zum einen dazu genutzt werden, das Metallborhydrid, insbesondere Natriumborhydrid, aus dem ersten Behälter zu entnehmen und zum Reaktor zu transportieren. Zum anderen kann die Transportschnecke dazu genutzt werden, das Reaktionsgemisch durch den Reaktor zu transportieren, wobei gleichzeitig eine intensive Durchmischung des Reaktionsgemisches erfolgt.

Gemäß einer Ausführungsform ist im System ein Speicher für Wasserstoffgas vorgesehen. Die Entnahmevorrichtung zur Entnahme von Wasserstoffgas ist dann mit dem Speicher für Wasserstoffgas verbunden.

Mit dieser Ausführungsform kann ein Puffer für die Abgabe des Wasserstoffgases an den Verbraucher, in welchem das Wasserstoffgas unter Freisetzung von Energie oxidiert wird, geschaffen werden.

Eine solche Ausführungsform ist insbesondere geeignet, wenn der Verbraucher rasche Änderungen beim Verbrauch der Energie erfordert. So ist es bei einem Motor, welcher zum Antrieb eines Kraftfahrzeugs eingesetzt wird, erforderlich, dass dieser ausreichend rasch reagiert, um beispielsweise Beschleunigungsvorgänge durchführen zu können. Bei einem solchen Beschleunigungsvorgang muss, sofern der Wasserstoff beispielsweise direkt in einem Verbrennungsmotor verbraucht wird, recht kurzfristig eine größere Menge an Wasserstoff zur Verfügung stehen.

Um eine Trägheit des Systems bei der Freisetzung des Wasserstoffgases aus Metallborhydrid, insbesondere Natriumborhydrid, auszugleichen, wird kurzfristig gasförmiger Wasserstoff aus dem Speicher für Wasserstoffgas entnommen und dem Motor zugeführt.

Gemäß einer Ausführungsform ist im System ein Verdichter vorgesehen, mit welchem der gasförmige Wasserstoff verdichtet werden kann, ehe er in den Speicher für Wasserstoffgas eingeleitet wird. Das Volumen des Speichers für Wasserstoffgas kann daher relativ klein gewählt werden.

Gemäß einer weiteren Ausführungsform ist vorgesehen, dass das System eine Batterie zur Aufnahme/Abgabe von elektrischer Energie umfasst.

Die Batterie kann als Puffer genutzt werden, wenn das System beispielsweise einen Elektromotor als Verbraucher umfasst.

Vorteilhaft umfasst das System bei dieser Ausführungsform eine Brennstoffzelle als Verbraucher, mit welcher Elektrizität erzeugt wird. Sowohl der Reaktor, in welchem Wasserstoffgas aus Metallborhydrid, insbesondere Natriumborhydrid, erzeugt wird, als auch die Brennstoffzelle können dann im optimalen Bereich betrieben werden. Sowohl der Reaktor zur Erzeugung von gasförmigem Wasserstoff als auch die Brennstoffzelle reagieren relativ träge auf Laständerungen. Diese Trägheit kann bei Verwendung einer Batterie ausgeglichen werden, da Batterien, wie Lithiumbatterien, rasch auf Lastanforderungen reagieren können.

So kann das System gemäß einer Ausführungsform in der Weise geführt werden, dass der Reaktor zur Erzeugung von gasförmigem Wasserstoff eine bestimmte Menge an gasförmigem Wasserstoff erzeugt. Diese Menge kann innerhalb eines bestimmten Bereichs variiert werden, der durch die Menge an Metallborhydrid, insbesondere Natriumborhydrid, bestimmt ist, die im Reaktor pro Zeiteinheit umgesetzt werden kann. Bei einem Wechsel der Lastanforderungen reagiert der Reaktor relativ träge, d.h. nach einer Modifikation der Menge an Metallborhydrid, insbesondere Natriumborhydrid, die pro Zeiteinheit im Reaktor umgesetzt wird, stellt sich nach einer gewissen Zeitspanne erneut eine bestimmte pro Zeiteinheit erzeugte Wasserstoffgasmenge ein.

Übertrifft die im Reaktor erzeugte Menge an Wasserstoffgas die Menge an Energie, die zu diesem Zeitpunkt durch das Systemerzeugt werden soll, beispielsweise elektrische Energie in einer Brennstoffzelle bzw. kinetische Energie in einem Verbrennungsmotor, wird der überschießende Teil des Wasserstoffgases in den Speicher für Wasserstoffgas überführt.

Übertrifft jedoch die benötigte Energie, die mit dem System erzeugt werden soll, die Menge des im Reaktor erzeugten Wasserstoffgases, so wird Wasserstoffgas aus dem Speicher entnommen und im Verbraucher beispielsweise in elektrische oder kinetische Energie umgewandelt.

Ist der Verbraucher im System eine Brennstoffzelle, die Strom erzeugt, welcher dann einen Elektromotor, beispielsweise in einem Automobil antreibt, kann zunächst die Brennstoffzelle im optimalen Bereich betrieben werden. Benötigt der Elektromotor weniger Strom, als mit der Brennstoffzelle erzeugt wird, wird der überschüssige Strom in der Batterie zwischengespeichert. Wird sehr viel Strom benötigt, beispielsweise weil das Automobil in einem Überholvorgang beschleunigt wird, wird zusätzlich zu dem Strom, der von der Brennstoffzelle erzeugt wird, Strom aus der Batterie entnommen, so dass bei einer Leistungsspitze ausreichend Elektrizität zur Verfügung steht.

Neben dem Wasserstoffspeicher bzw. der Batterie können noch weitere Speichersysteme mit dem erfindungsgemäßen System kombiniert werden.

Gemäß einer Ausführungsform ist ein hydrostatischer Hochleistungsspeicher vorgesehen, sowie eine Verdichtereinrichtung zur Verdichtung eines gasförmigen Speichermediums.

Der hydrostatische Hochleistungsspeicher kann gemäß einer Ausführungsform als Doppelblasenspeicher und/oder als Doppelkolbenspeicher ausgebildet sein.

Flüssigkeiten wie auch Hydraulikflüssigkeit, sind praktisch inkompressibel und können deshalb keine Druckenergie speichern. In hydropneumatischen Speichern nutzt man die Kompressibilität eines Gases (Stickstoff) zur Flüssigkeitsspeicherung. Kolbenspeicher, Blasenspeicher und Membranspeicher beruhen auf diesem Prinzip. Ein Kolbenspeicher besteht aus einem Flüssigkeits- und einem Gasteil mit dem Kolben als gasdichtendem Trennelement. Die Gasseite ist mit Stickstoff vorgefüllt. Der Flüssigkeitsteil steht mit dem hydraulichen Kreislauf in Verbindung, so dass beim Ansteigen des Druckes der Kolbenspeicher Flüssigkeit aufnimmt und das Gas komprimiert wird. Beim Absinken des Druckes dehnt sich das verdichtete Gas aus und verdrängt die gespeicherte Druckflüssigkeit in den Kreislauf. Doppelkolbenspeicher sorgen auf der Saugseite der Hydrostaten immer für optimale Ansaugverhältnisse und besitzen im Vergleich zu konventionellen Systemen mit Hochdruck- und Niederdruckseite höhere Energie- und Leistungskapazitäten. Hydraulikmotoren werden mit Hydraulikflüssigkeit aus der Hochdruckseite angetrieben, wobei die Hydraulikflüssigkeit nach der Leistungsabgabe mit geringerem Druck zurück in die Niederdruckseite strömt. Mit dem Doppelkolbenspeicher können außerdem innovative energiesparende Lösungen zur hydraulischen Lastkompensation erzielt werden.

Gemäß einer Ausführungsform kann eine elektrische Hydraulikpumpe vorgesehen sein, mit welcher der hydrostatische Hochdruckspeicher aufgeladen werden kann.

Über ein gemeinsames Druckleitungssystem kann der hydrostatische Hochdruckspeicher mit kompakten Hydraulikradnabenmotoren für den Antrieb eines Fahrzeugs verbunden sein.

Ist der hydrostatische Hochdruckspeicher in einem geladenen Zustand, d.h. der hydrostatische Hochdruckspeicher ist mit einem komprimierbaren Speichermedium, beispielsweise Stickstoff oder Druckluft, gefüllt, kann das komprimierbare Speichermedium zum Antrieb der Hydraulikradnabenmotoren genutzt werden.

Beim Bremsen oder bei einer Bergabfahrt können die Hydraulikradnabenmotoren genutzt werden, um den hydrostatischen Hochdruckspeicher wieder aufzufüllen bzw. zu beladen.

Der hydrostatische Hochdruckspeicher besteht aus einem Hochdruck- und einem Niederdruckteil. Hydrauliköl wird unter hohem Druck mit einer Hydraulikpumpe oder bei Rekuperation von Bremsenergie in Umkehrung eines Hydraulikmotors zur Hydraulikpumpe in der Hydraulikspeicher gepumpt, wo es Stickstoff, der sich im Speicher in einer Blase oder Membran befindet, komprimiert. Vorteilhaft kann dazu auch ein Doppelkolbenspeicher eingesetzt werden, der effizient Hochdruck und Niederdruckteil kombiniert. Diese Speicher können sehr schnell fast die gesamte Bremsenergie aufnehmen und an die Hydraulikmotoren bei Bedarf wieder schnell abgeben. Diese Speicher sind sehr robust und können als Pufferspeicher dafür sorgen, dass ein Wasserstoff-Motor bzw. eine Brennstoffzelle mit Elektromotor und jeweils mit Hydraulikpumpe im intermittierenden Betrieb den Hochdruckspeicher als Pufferspeicher ebenfalls vorteilhaft wieder aufladen können. Dabei arbeiten sie mit konstanter Drehzahl und konstantem Drehmoment - also ohne Lastwechsel stets effizient im Bestpunkt, was vorteilhaft einen konstanten Verbrauch von Wasserstoff ermöglicht.

Ein weiterer Gegenstand der Erfindung ist ein Verfahren zur Bereitstellung von Energie unter Verwendung des oben beschriebenen Systems.

Bei dem erfindungsgemäßen Verfahren zur Bereitstellung von Energie wird
- ein Metallborhydrid, insbesondere Natriumborhydrid, bereitgestellt,
- ein System wie es oben beschrieben worden ist bereitgestellt,
- in dem System Wasserstoffgas aus dem Metallborhydrid, insbesondere Natriumborhydrid, erzeugt, und
- aus dem Wasserstoffgas Energie erzeugt.

Die wesentlichen Merkmale des erfindungsgemäßen Verfahrens wurden bereits bei der Erläuterung des erfindungsgemäßen Systems beschrieben. Auf die entsprechenden Abschnitte der Beschreibung wird verwiesen.

Bei dem erfindungsgemäßen Verfahren wird zunächst ein Metallborhydrid, insbesondere Natriumborhydrid, bereitgestellt.

Das Metallborhydrid, insbesondere Natriumborhydrid, wird bevorzugt als Pulver bereitgestellt. Die Korngröße des Pulvers wird bevorzugt klein gewählt.

Bevorzugt ist das Metallborhydrid, insbesondere Natriumborhydrid, mit einem Rieselhilfsmittel versetzt, sodass das pulverförmige Metallborhydrid, insbesondere Natriumborhydrid, nicht verbackt und Klumpen ausbildet. Ein geeignetes Rieselhilfsmittel ist beispielsweise feinverteiltes Siliziumdioxid. Der Anteil des Rieselmittels wird bevorzugt gering gewählt. Gemäß einer Ausführungsform beträgt der Anteil des Rieselmittels weniger als 5 Gew.-%, gemäß einer weiteren Ausführungsform beträgt der Anteil des Rieselmittels weniger als 2 Gew.-%, und gemäß noch einer weiteren Ausführungsform beträgt der Anteil des Rieselmittels weniger als 1 Gew.-%. Gemäß einer Ausführungsform beträgt der Anteil des Rieselmittels mehr als 0,1 Gew.-%, und gemäß einer weiteren Ausführungsform beträgt der Anteil des Rieselmittels mehr als 0,5 Gew.-%. Die prozentualen Angaben beziehen sich auf das trockene Gemisch, welches das Natriumborhydrid enthält.

Das Natriumborhydrid wird dann mit Wasser versetzt. Das Wasser kann in einem Vorratstank bereitgestellt sein und wird gemäß einer Ausführungsform mittels einer Pumpe aus dem Vorratstank gefördert.

Das Wasser wird in einer Menge zum Metallborhydrid, insbesondere Natriumborhydrid, gegeben, die gemäß einer Ausführungsform etwas über der stöchiometrischen Menge der Umsetzung des Metallborhydrids, insbesondere Natriumborhydrids, mit Wasser liegt. Bevorzugt wird die zugeführte Wassermenge im Bereich von 101 bis 120 % der stöchiometrischen Menge gewählt.

Gemäß einer Ausführungsform kann das Wasser in einer Geschwindigkeit zugeführt werden, die den Halbwertzeiten der Hydrolyse bei 25 ° Celsius entspricht.

Beispielhafte Werte sind in der folgenden Tabelle angegeben:

| pH | 4,0 | 5,0 | 5,5 | 6,0 |
|---|---|---|---|---|
| t_{1/2} | 3,7 ms | 37 ms | 0,12 s | 0,37 s |

Bei diesem Vorgehen fällt das entstehende Metallborat, insbesondere Natriummetaborat, im Wesentlichen als Feststoff an.

Gemäß einer Ausführungsform wird das befeuchtete Metallborhydrid, insbesondere Natriumborhydrid, intensiv bewegt. Es erfolgt dabei ein Knetvorgang, der ein Verklumpen der Reaktionsmasse verhindert.

Die Reaktionsmasse, also das befeuchtete Metallborhydrid, insbesondere Natriumborhydrid, wird mit einem Katalysator in Kontakt gebracht.

Der Katalysator kann in flüssiger Form bereitgestellt werden, beispielsweise indem er im Wasser gelöst wird. Bei der Befeuchtung wird dann der Katalysator mit dem Metallborhydrid, insbesondere Natriumborhydrid, in Kontakt gebracht.

Gemäß einer Ausführungsform wird das befeuchtete Metallborhydrid, insbesondere Natriumborhydrid, in einer Schraubenpumpe transportiert. Bei einer Schraubenpumpe dreht sich eine Schraube in einem Gehäuse, wobei die Reaktionsmischung in der Wendel der Schraube transportiert wird. Durch die Bewegung der Schraube wird das befeuchtete Metallborhydrid, insbesondere Natriumborhydrid, an der Innenwand des Pumpengehäuses entlang bewegt.

Gemäß einer Ausführungsform ist der Katalysator in einer Schicht enthalten, die auf der Innenwand des Pumpengehäuses und/oder auf der Außenfläche der Schraube aufgebracht ist. Wird das befeuchtete Metallborhydrid, insbesondere Natriumborhydrid, an der Schicht entlanggeführt, kommt es mit dem Katalysator in Kontakt und es wird Wasserstoffgas freigesetzt. Gleichzeitig entsteht Metallborat, insbesondere Natriummetaborat.

Natriummetaborat ist in Wasser schwerer löslich als Natriumborhydrid. Wird das Wasser nur in stöchiometrischer Menge zugesetzt bzw. übersteigt die zugegebene Wassermenge die stöchiometrische Menge nur geringfügig, löst sich eine geringe Menge an Natriumborhydrid zunächst auf und reagiert mit dem Wasser. Das entstehende Natriummetaborat fällt dann wieder als Feststoff aus.

Um ein Verstopfen der Schraubenpumpe zu verhindern und eine ausreichende Plastizität der Reaktionsmasse zu erreichen, sodass diese durch die Schraubenpumpe gefördert werden kann, ist vorgesehen, dass während des Durchgangs der Reaktionsmasse durch die Schraubenpumpe, vorzugsweise kontinuierlich, geringe Mengen an Wasser zu der Reaktionsmasse gegeben werden. Die Zugabe erfolgt bevorzugt über in der Gehäusewand der Schraubenpumpe vorgesehene Düsen. Ein Anhaften des entstehenden Metallborats, insbesondere Natriummetaborats, an Innenflächen der Schraubenpumpe wird dadurch verhindert.

Gemäß einer Ausführungsform werden jeweils nur geringe Mengen an Metallborhydrid, insbesondere Natriumborhydrid, im Reaktor umgesetzt. Wirkt die Schraubenpumpe als Reaktor, wird die Schraubenpumpe relativ kompakt ausgestaltet, sodass jeweils nur geringe Mengen an Metallborhydrid, insbesondere Natriumborhydrid, verarbeitet werden.

Die Erfindung wird im Weiteren unter Bezugnahme auf eine Zeichnung näher erläutert. Die Figuren der Zeichnung zeigen:
- Fig. 1:: eine schematische Darstellung eines als Schraubenpumpe ausgestalteten Reaktors;
- Fig. 2:: eine schematische Darstellung einer Ausführungsform des Systems zur Bereitstellung von Energie;
- Fig. 3:: eine schematische Darstellung einer Ausführungsform des Systems zur Bereitstellung von Energie, wobei die entstehende Energie zum Vortrieb eines Kraftfahrzeugs mit einem Wasserstoffgas-Verbrennungsmotor verwendet wird;
- Fig. 4: eine schematische Darstellung einer Ausführungsform des Systems zur Bereitstellung von Energie, wobei die entstehende Energie zum Vortrieb eines Kraftfahrzeugs mit einem Elektromotor verwendet wird.

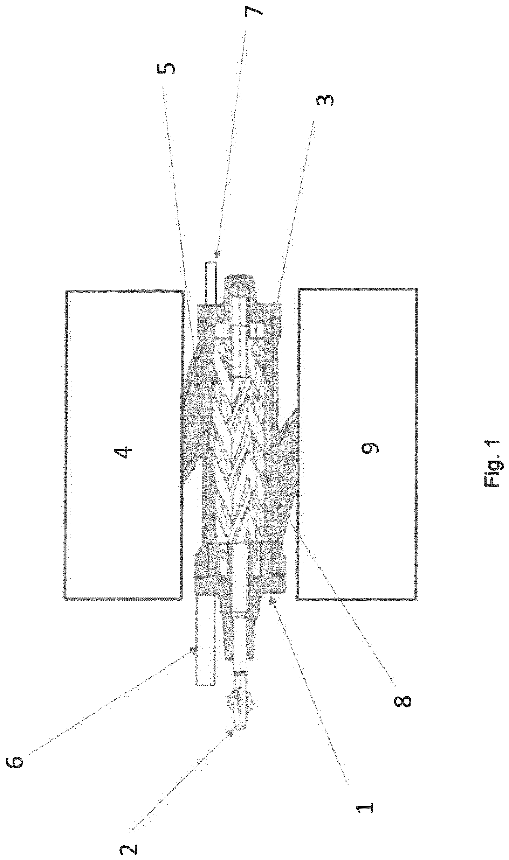

In Fig. 1 ist schematisch ein als Schraubenpumpe 1 ausgestalteter Reaktor im Schnitt dargestellt. Die Schraubenachse 2 wird über einen externen Antrieb (nicht dargestellt) angetrieben und in Rotation versetzt. An der Schraubenachse 2 sind schraubenförmige Schaufeln 3 vorgesehen.

Ein erster Behälter 4 ist mit Natriumborhydrid befüllt. Durch die Transportstrecke 5 wird unter der Wirkung der rotierenden Schaufeln 3 Natriumborhydrid aus dem ersten Behälter 4 entnommen und über eine Transportstrecke 5 in den Innenraum der Schraubenpumpe 1 transportiert.

Über eine Wasserzuführung 6 wird Wasser in den Innenraum der Schraubenpumpe eingeführt und wird dort unter Wirkung der rotierenden Schaufeln 3 mit dem Natriumborhydrid verknetet.

Der Innenraum der Schraubenpumpe 1 ist mit einer Beschichtung versehen, welche einen Katalysator enthält, der die Reaktion des Natriumborhydrids mit dem Wasser katalysiert. Das bei der Reaktion freiwerdende Wasserstoffgas wird über Gasableitung 7 aus dem Innenraum der Schraubenpumpe 1 ausgeleitet und in einem (nicht dargestellten) Sammelbehälter gesammelt.

Das bei der Reaktion entstehende Natriummetaborat wird über Ausleitung 8 aus dem Innenraum der Schraubenpumpe 1 ausgeleitet und in einem zweiten Behälter 9 gesammelt.

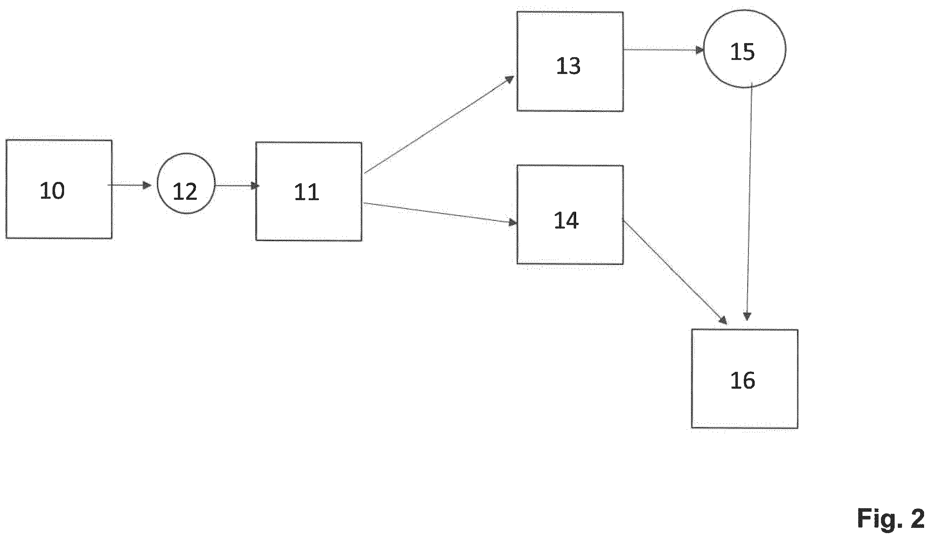

In Fig. 2 ist schematisch eine Ausführungsform eines erfindungsgemäßen Systems zur Bereitstellung von Energie gezeigt.

Das System umfasst zunächst eine Erzeugereinheit 10 für Wasserstoffgas. Die Erzeugereinheit 10 entspricht einer Vorrichtung, wie sie in Fig. 1 gezeigt ist und wie sie oben erläutert wurde.

Der in der Erzeugereinheit 10 erzeugte gasförmige Wasserstoff wird in einem Zwischenspeicher 11 gespeichert. Zwischen Erzeugereinheit 10 und Zwischenspeicher 11 ist ein Kompressor 12 vorgesehen, mit welchem der gasförmige Wasserstoff komprimiert werden kann.

Aus dem Zwischenspeicher 11 kann der Wasserstoff wieder entnommen und einem Verbraucher zugeführt werden. Beispielhaft als Verbraucher sind in Fig. 2 ein mit Wasserstoffgas betriebener Verbrennungsmotor 13 sowie eine Brennstoffzelle 14 dargestellt.

Der Verbrennungsmotor 13 ist mit einem Generator 15 gekoppelt, sodass elektrische Energie erhalten wird. Die elektrische Energie kann dann in einem Akkumulator 16, beispielsweise einem Lithiumionen-Akku gespeichert und bei Bedarf wieder abgerufen werden.

In der Brennstoffzelle 14 wird direkt elektrische Energie erzeugt, die dann ebenfalls im Akkumulator 16 gespeichert werden kann.

Bei der in Fig. 2 gezeigten Ausführungsform wird die mit dem System erzeugte Energie in Form von elektrischer Energie im Akkumulator 16 gesammelt und steht dann beispielsweise zum Antrieb eines Elektromotors zur Verfügung.

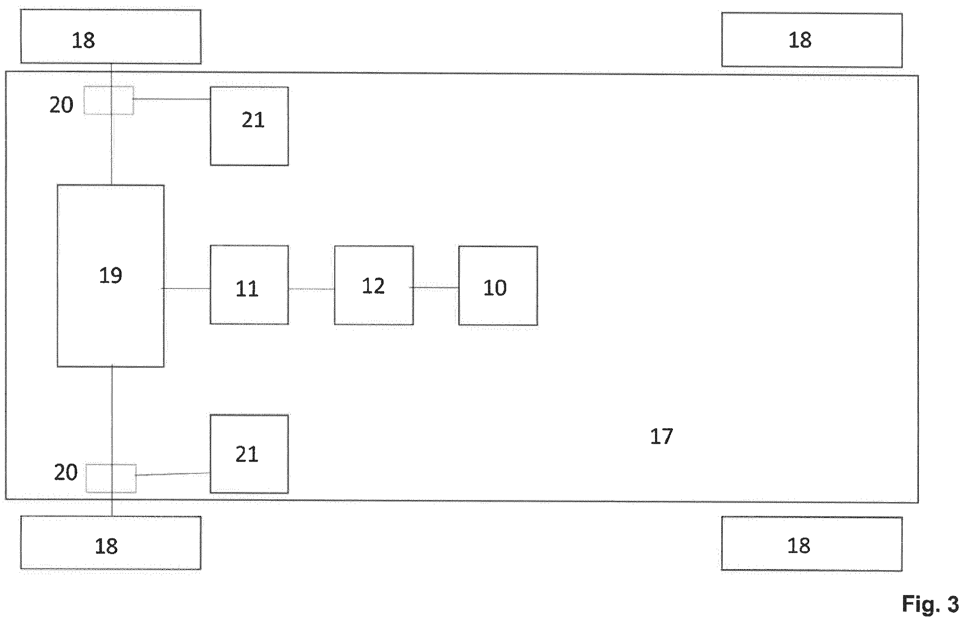

Fig. 3 zeigt schematisch die Anordnung des erfindungsgemäßen Systems bei der Verwendung in einem Kraftfahrzeug, wobei das Kraftfahrzeug mit einem Wasserstoffgas-Verbrennungsmotor angetrieben wird.

Das Kraftfahrzeug 17 umfasst Räder 18, von denen ein Radpaar durch einen Verbrennungsmotor 19 angetrieben wird. Der Verbrennungsmotor wird durch Wasserstoffgas angetrieben.

Das Wasserstoffgas wird in der Erzeugereinheit für Wasserstoffgas 10 erzeugt. Als Erzeugereinheit für Wasserstoffgas kann eine Vorrichtung verwendet werden, wie sie in Fig. 1 gezeigt ist und weiter oben erläutert wurde.

Über einen Kompressor 12 wird das aus der Erzeugereinheit 10 entnommene Wasserstoffgas verdichtet und in einem Zwischenspeicher 11 zwischengespeichert. Bei Bedarf wird aus dem Zwischenspeicher 11 Wasserstoffgas entnommen und dem Verbrennungsmotor 19 zugeführt. Durch die Verbrennung des Wasserstoffgases wird im Verbrennungsmotor 19 kinetische Energie erzeugt, die zum Vortrieb des Fahrzeugs genutzt werden kann.

Das Kraftfahrzeug 17 weist weiterhin Hydraulikradnabenmotoren 20 auf. Die Hydraulikradnabenmotoren nutzen ein Hydraulikmedium, beispielsweise Druckluft bzw. komprimierbaren Stickstoff, als Antriebsmedium. Das Hydraulikmedium wird über den Öldruck in den Hydraulikradnabenmotoren entspannt und treibt dabei den Motor an, das heißt die im Hydraulikmedium gespeicherte Energie wird in eine Rotationsbewegung umgewandelt. Beim Bremsen wirken die Hydraulikradnabenmotoren als Kompressoren, welche das Hydraulikmedium über den Öldruck verdichten und in einem Hochenergiespeicher 21 speichern. Dazu sind entsprechende Hydraulikleitungen vorgesehen.

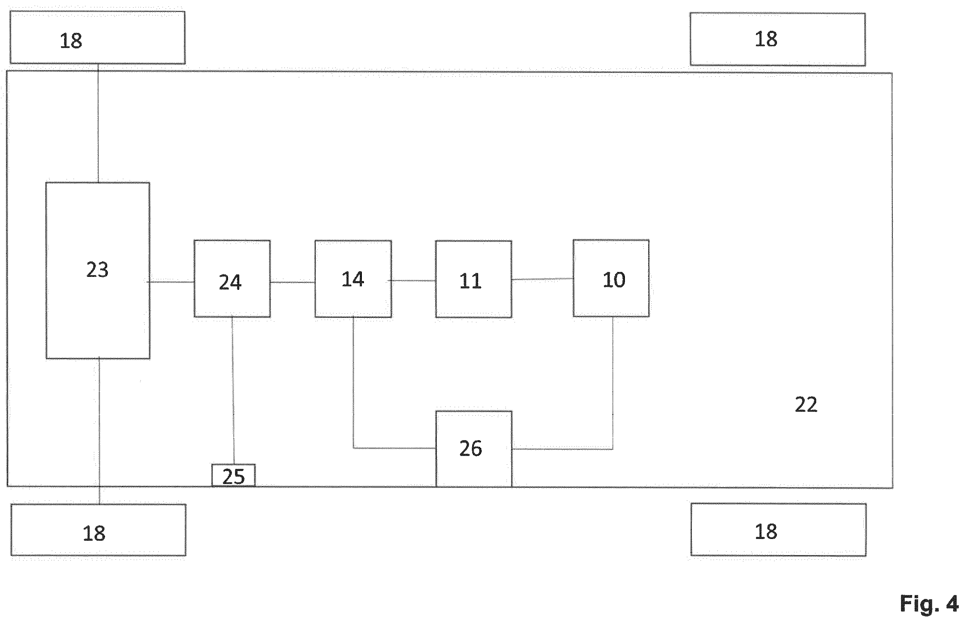

Fig. 4 zeigt schematisch die Anordnung des erfindungsgemäßen Systems bei der Verwendung in einem Kraftfahrzeug, wobei das Kraftfahrzeug mit einem Elektromotor angetrieben wird.

Das Kraftfahrzeug 22 weist vier Räder 18 auf, von welchen ein Radpaar durch einen Elektromotor 23 angetrieben wird. Der Elektromotor 23 bezieht den Strom aus einer Pufferbatterie 24. Die Pufferbatterie kann relativ klein ausgeführt sein und beispielsweise eine Kapazität im Bereich von 5 bis 15 kWh aufweisen. Sie kann mit einem externen Ladeanschluss 25 versehen sein, mit welchem sie sich an einer externen Ladestation aufladen lässt. Der Elektromotor 23 kann beim Bremsen als Generator wirken und elektrische Energie in die Batterie 24 zurückspeisen. Vorteilhaft kann die Pufferbatterie auch über photovoltaische Solarzellen auf der Außenhaut des Fahrzeugs bei Sonneneinstrahlung wieder aufgeladen werden.

Die Batterie 24 ist mit einer Brennstoffzelle 14 verbunden, mit welcher Elektrizität aus Wasserstoff gewonnen wird.

Der Wasserstoff für die Brennstoffzelle 14 wird mit der Erzeugereinheit 10 erzeugt und zunächst in Zwischenspeicher 11 zwischengespeichert. Die Erzeugereinheit entspricht der in Fig. 1 gezeigten und weiter oben erläuterten Erzeugereinheit. Die Erzeugereinheit ist mit einem Kassettensystem ausgerüstet (nicht dargestellt), welches Behälter für die Bereitstellung von Natriumborhydrid bzw. für die Aufnahme von Natriummetaborat umfasst. Die Behälter können an einer Wechselstation (nicht dargestellt) ausgewechselt werden.

Aus dem Zwischenspeicher 11 wird das Wasserstoffgas der Brennstoffzelle 14 zugeführt und darin mit Sauerstoff, welcher in der Luft enthalten ist, unter Erzeugung von elektrischer Energie umgesetzt. Das bei der Oxidation des Wasserstoffs entstehende Wasser wird in einem Wassertank 26 gesammelt. Er steht dann für die Prozessierung des Natriumborhydrids in der Erzeugereinheit 10 zur Verfügung. Der Wassertank 26 kann auch von außen mit Wasser betankt werden.

### Bezugszeichenliste

- 1: Schraubenpumpe
- 2: Schraubenachse
- 3: Schraubenförmige Schaufel
- 4: Erster Behälter
- 5: Transportweg
- 6: Wasserzuführung
- 7: Gasableitung
- 8: Ausleitung
- 9: Zweiter Behälter
- 10: Erzeugereinheit für Wasserstoffgas
- 11: Zwischenspeicher
- 12: Kompressor
- 13: Verbrennungsmotor
- 14: Brennstoffzelle
- 15: E-Generator
- 16: Akkumulator
- 17: Kraftfahrzeug
- 18: Räder
- 19: Verbrennungsmotor
- 20: Hydraulikradnabenmotoren
- 21: Hochenergiespeicher
- 22: Kraftfahrzeug
- 23: Elektromotor
- 24: Pufferbatterie
- 25: Ladeanschluss
- 26: Wassertank

## Patentansprüche

1. System zur Bereitstellung von Energie, umfassend:
- Ein System zur Bereitstellung von gasförmigem Wasserstoff, umfassend:
- Einen ersten Behälter (4) zur Bereitstellung eines festen Metallborhydrids,
- Einen Reaktor (10) zur Freisetzung von Wasserstoffgas aus dem Metallborhydrid,
- Einen zweiten Behälter (9) zur Aufnahme des verbrauchten Metallborhydrids,
- Einen Verbraucher, in welchem das Wasserstoffgas unter Freisetzung von Energie oxidiert wird,
wobei nach dem ersten Behälter (4) eine Transportvorrichtung vorgesehen ist, mit welcher das Metallborhydrid aus dem ersten Behälter (4) entnommen und dem Reaktor (10) zugeführt wird, und der Reaktor (10) aufweist:
- eine Wasserzuführung (6) zum Befeuchten des Metallborhydrids;
- eine Vorrichtung zur Bereitstellung eines Katalysators, und
- eine Entnahmevorrichtung (7) zur Entnahme von Wasserstoffgas.

2. System nach Anspruch 1, wobei das Metallborat Natriumborhydrid ist.

3. System nach Anspruch 1 oder 2, wobei der erste Behälter (4) und/oder der zweite Behälter (9) als Wechselbehälter ausgeführt ist.

4. System nach einem der Ansprüche 1 bis 3, wobei am Reaktor (10) eine Elektropulsationsvorrichtung vorgesehen ist, mit welcher eine pulsierende Spannung an den Reaktor angelegt wird.

5. System nach einem der Ansprüche 1 bis 4, wobei die Vorrichtung zur Bereitstellung des Katalysators als Beschichtung ausgeführt ist, welche den Katalysator enthält.

6. System nach Anspruch 5, wobei die Beschichtung auf zumindest einer Innenwand des Reaktors (10) vorgesehen ist.

7. System nach Anspruch 6, wobei die Beschichtung eine laserinduzierte Oberflächenstruktur aufweist.

8. System nach einem der vorhergehenden Ansprüche, wobei erster und zweiter Behälter als gemeinsamer Behälter ausgebildet sind und der gemeinsame Behälter eine verschiebbare Trennwand aufweist, welcher den Innenraum des gemeinsamen Behälters in ein erstes Kompartment und ein zweites Kompartment aufteilt.

9. System nach einem der vorhergehenden Ansprüche, wobei die Transportvorrichtung als Transportschnecke ausgeführt ist.

10. System nach Anspruch 9, wobei die Transportschnecke zumindest teilweise im Reaktionsraum des Reaktors angeordnet ist.

11. System nach einem der vorhergehenden Ansprüche, wobei ein Speicher (11) für Wasserstoffgas vorgesehen ist und die Entnahmevorrichtung zur Entnahme von Wasserstoffgas mit dem Speicher für Wasserstoffgas verbunden ist.

12. System nach eine der vorhergehenden Ansprüche, wobei der Verbraucher, in welchem das Wasserstoffgas unter Freisetzung von Energie oxidiert wird, eine Brennstoffzelle (14) oder eine Wärmekraftmaschine (19) ist.

13. System nach einem der vorhergehenden Ansprüche, wobei eine Batterie (16) zur Aufnahme/Abgabe von elektrischer Energie vorgesehen ist.

14. System nach einem der vorhergehenden Ansprüche, wobei ein hydrostatischer Hochleistungsspeicher (21) vorgesehen ist, sowie eine Verdichtereinrichtung zur Verdichtung eines gasförmigen Speichermediums.

15. Verfahren zur Bereitstellung von Energie, wobei
- Ein Metallborhydrid bereitgestellt wird,
- Ein System nach einem der Ansprüche 1 bis 14 bereitgestellt wird,
- In dem System Wasserstoffgas aus dem Metallborhydrid erzeugt wird, und
- Aus dem Wasserstoffgas Energie erzeugt wird.

16. Verfahren nach Anspruch 15, wobei bei der Erzeugung von Wasserstoff ein Metallborat erzeugt wird, und das Metallborat in einer Recyclinganlage zu Metallborhydrid umgesetzt wird.

17. Verfahren nach einem der Ansprüche 15 oder 16, wobei das Metallborhydrid Natriumborhydrid und das Metallborat Natriummetaborat ist.
